# EUROPEAN PATENT SPECIFICATION

(11) **EP 4 028 812 B1**
(45) Date of publication and mention of the grant of the patent: **04.11.2026**
(21) Application number: 20775962.2
(22) Date of filing: 10.09.2020
(51) Int. Cl.: H02G 9/06, G02B 6/44, G02B 6/50, H02G 3/04, G01L 1/24, G01M 3/04, G01M 5/00, G01B 11/16, G01K 11/32, G01M 11/08

(54) **FOLDABLE CARRIER STRUCTURE CARRYING OPTICAL FIBERS**
FALTBARE TRÄGERSTRUKTUR MIT OPTISCHEN FASERN
STRUCTURE DE SUPPORT PLIABLE POUR PORTER DES FIBRES OPTIQUES

(30) Priority: 12.09.2019 NL 2023817
(43) Date of publication of application: 20.07.2022
(73) Proprietor: Compass Photonics B.V., 3077 BH Rotterdam (NL)
(72) Inventor: VAN DER HOEK, Marinus Jacobus, 3077 BH ROTTERDAM (NL)
(74) Representative: Algemeen Octrooi- en Merkenbureau B.V.
(86) International application number: PCT/NL2020/050559
(87) International publication number: WO 2021/049934

(56) References cited:
- EP-A2- 0 292 221
- EP-A2- 1 346 449
- WO-A1-2009/118715
- US-A- 4 927 232
- US-A- 5 069 254
- US-A1- 2006 237 219
- US-B2- 9 534 965

## Description

### FIELD OF THE INVENTION

The present invention relates to a foldable carrier structure carrying optical fibers, a storage system storing such a foldable carrier structure, as well as a method for using such a foldable carrier structure.

### BACKGROUND OF THE INVENTION

Carrier structures for carrying optical fibers are known from the prior art. For instance, US 9 534 965 B2 discloses a cable for distributed fiber optic sensing, comprising a flexible tape, an optical fiber suitable for Brillouin scattering measurement forming at least two lengths, and at least one free end of at least one length being connectable to a reading unit, wherein at least a section of the longitudinal length of the flexible tape is situated between at least a section of the two lengths such that the two lengths are in close proximity such that a temperature gradient between the two lengths is minimized, and wherein the section of the tape and the section of lengths can flex together.

WO 2007/099290 A1 discloses an apparatus for monitoring changes in the shape of a hollow structure comprises a flexible elongate support, which includes several optical fiber strain sensors each arranged to measure strain in the longitudinal direction of the support. The strain sensors are spaced in a direction perpendicular to the longitudinal direction of the support and the support is adapted to bear against the inner surface of the hollow structure, such that changes in shape of the structure along the longitudinal direction result in generally corresponding changes in shape of the support.

DE 10 2007 032351 A1 discloses a sensor-integrated fiber textile comprises a textile fabric and an integrated fiber optic sensor on glass or polymer base. Composite structure and reinforcement, and continuously distributed measurement of mechanical and physical variables are realized on the basis of optical time-domain reflectometry (OTDR) measurement method. Also disclosed is a method for producing a sensor-integrated fiber textile, which involves utilizing a textile fabric and an integrated fiber optic sensor on glass or polymer base.

US 2005/0163414 A1 discloses a method of manufacturing a rib structural system, tape-shaped pre-pregs, each made of a fiber reinforced composite material into which a resin is impregnated, are laminated to form ribs in the form of a grid, while an optical fiber including Fiber Bragg Grating members at predetermined locations is layered in the ribs. The Fiber Bragg Grating members are arranged at intermediate locations dependent upon their reflection wavelengths, each of the intermediate locations being substantially midway between two adjacent intersections in of two or more ribs.

US 2006/0237219 discloses a high performance communications cable or cable support-separator and/or jacket that provides reduced cross-talk between transmission media and includes one or more core support-separators having various shaped profiles which define a clearance to maintain spacing between transmission media or transmission media pairs.

US 5 069 254 B discloses a conduit assembly for cabling and, more particularly, a cable assembly which comprises four extruded synthetic resin tubes connected by flexible webs thereby forming an array which can be bent to bundle the tubes together and form a tube bundle.

EP 1 346 449 A2 discloses a method for installing a duct, a longitudinal member being present along the section over which the duct is to be installed, the longitudinal element being made use of as a conductor for the duct to be installed, wherein the duct is to be propelled.

A problem with the known carrier structures, however, is that such carrier structures may be difficult to install at an installation (measurement/monitoring) location, especially when very long carrier structures and similarly long optical fibers are required, for instance in the order of several hundreds of meters long, such as for installation in a dike or similar infrastructural objects.

A further problem with the known carrier structures is that transporting very long carrier structures is highly cumbersome.

Yet another problem with the currently known carrier structures is that after installation at the installation location the optical fibers must remain strictly spatially fixed with respect to each other and/or the carrier structure for extended periods of time to ensure proper measurements/monitoring.

### OBJECT OF THE INVENTION

An object of the invention is therefore to provide a carrier structure carrying optical fibers which is easy to install at an installation (measurement) location, especially when very long carrier structures and similarly long optical fibers are required.

A further object of the invention is to provide a carrier structure carrying optical fibers, wherein long carrier structures and consequently long optical fibers can be transported in an easy manner.

Yet another object of the invention is to provide a carrier structure carrying optical fibers, wherein, after installation at the installation location, the optical fibers remain spatially fixed with respect to each other and/or the carrier structure for extended periods of time to ensure proper measurements/monitoring.

### DESCRIPTION OF THE INVENTION

Hereto, according to the invention, a foldable carrier structure carrying one or more optical fibers according to claim 1 is provided.

The above foldable carrier structure is easy to install at an installation (measurement) location, especially when very long carrier structures and similarly long optical fibers are required. The foldable carrier structure can easily be folded from the unfolded state to the folded state at the installation location and subsequently installed. Preferably, this is done as a continuous process, for instance by using a dedicated folding device. As an added bonus, the unfolded foldable carrier structure is also relatively easy to produce. Preferably, this is also done as a continuous process. The optical fibers can be e.g. attached to, integrated with or embedded into the foldable carrier structure in the same production step, or integrated with, embedded in or attached to the foldable carrier structure during a second or separate production step.

Due to the foldability of the carrier structure long carrier structures and consequently long optical fibers can be transported in an easy manner, because the foldable carrier structure can be unfolded during transportation, preferably having a fully flat structure, such that the foldable carrier structure can e.g. be rolled up on a drum or the like.

The rigid, tubular carrier structure furthermore ensures that after installation at the installation location, the optical fibers remain spatially fixed with respect to the tubular carrier structure and/or each other for extended periods of time to ensure proper measurements/monitoring.

In the context of the present patent application "rigid" should generally be understood as: having sufficient stiffness to prevent the optical fibers from spatially moving with respect to each other after installation. The expression "lateral" generally indicates a direction transversal to the longitudinal axis. The expression "tubular" generally indicates a hollow, elongate shape. "Tubular" furthermore does not merely imply a circular cross-section. Rectangular, triangular or other cross-sectional shapes also fall under the present patent application's definition of "tubular". "Comprised by the foldable carrier structure", as mentioned before, refers to the optical fibers being spatially fixed with respect to (each other and/or) the foldable carrier structure itself, such as by attachment to the foldable carrier structure, by integration with the foldable carrier structure, by embedding the optical fibers in the foldable carrier structure, by wrapping the optical fibers around the foldable carrier structure, or parts thereof, or e.g. by the optical fibers being squeezed into the interior of the foldable carrier structure in the folded state, wherein the side structures keep the one or more optical fibers in place.

EP 0292 221 A2 furthermore discloses a foldable trunking for accommodating electrical wiring, for instance for easy attachment of the electrical wiring to a wall or the like. However, EP 0292 221 A2 does not disclose optical fibers. Furthermore, EP 0292 221 A2 does not address the problem of installing very long optical fibers and the accompanying challenge of keeping them spatially fixed with respect to each other for obtaining proper measurements/monitoring. EP 0292 221 A2 also does not address the problem of transporting such very long optical fibers.

WO 2009/118715 A1 also discloses a trunking for accommodating electrical cables of the like on a wall, roof space or slab of a construction. However, WO 2009/118715 A1 also does not disclose the use of optical fibers, nor addresses the challenges associated with installing very long optical fibers, nor the accompanying issues of keeping them spatially fixed with respect to each other for obtaining proper measurements/monitoring during use. Moreover, WO 2009/118715 A1 teaches to pull the electrical wiring through the trunking only after the corners of the trunking have been clipped together, whereas the present invention teaches to connect or embed the optical fibers to or in the unfolded foldable structure already before folding the unfolded foldable structure into the folded use state.

NL 1 016 894 C does not disclose a foldable structure wherein laterally adjacent side structures are folded towards each other along one or more longitudinally extending folding lines.

US 4 927 232 A and US 9 534 965 B2 (as discussed in the foregoing) disclose structures for carrying optical fibers. The respective structures, however, are not foldable.

An embodiment relates to an aforementioned foldable carrier structure, comprising three longitudinally extending side structures with two longitudinally extending folding lines and one longitudinally extending connection line, wherein in the folded state a rigid, tubular structure with a triangular cross-section is formed. The inventor has found that such a foldable carrier structure with a triangular cross-section is easy to fold, easy to produce and keeps the optical fibers successfully fixed with respect to each other long after installation, especially when the optical fibers are arranged at the corners of the triangular structure, i.e. at the folding lines and/or connection line.

An embodiment relates to an aforementioned foldable carrier structure, comprising four longitudinally extending side structures with three longitudinally extending folding lines and one longitudinally extending connection line, wherein in the folded state a rigid, tubular structure with a rectangular or square cross-section is formed. Similar to the abovementioned foldable carrier structure with a triangular cross-section, the inventor has found that a foldable carrier structure with a rectangular or square cross-section is also easy to fold, easy to produce and keeps the optical fibers successfully fixed with respect to each other after installation, especially when the optical fibers are arranged at the corners of the rectangular or square structure, i.e. at the folding lines and/or connection line. This embodiment is particularly suitable when complex spatial measurements are to be carried out, requiring the provision of a relatively large number of optical fibers.

An embodiment relates to an aforementioned foldable carrier structure, wherein the longitudinally extending side structures and the longitudinally extending optical fibers are arranged to form a flat structure in the unfolded state. Such a flat structure can be easily rolled up on e.g. a drum for transport, and unrolled from the drum for installing the foldable carrier structure.

According to the invention, the one or more optical fibers are arranged at the connection line and/or folding lines, wherein the one or more optical fibers longitudinally extend along the connection line and/or folding lines. The inventor has found that this particular configuration provides exceptional spatial fixation of the optical fibers and is at the same time easy to produce.

An embodiment relates to an aforementioned foldable carrier structure, wherein the longitudinally extending side structures comprise truss structures. The advantages of such truss structures, for instance being alternatingly provided with lateral/transversal and diagonal beams, is that they provide very good stiffness to the folded carrier structure, whereas at the same time they can be easily incorporated in the unfolded foldable carrier structure, also - and in particular - when the unfolded foldable carrier structure has the form of a flat structure.

An embodiment relates to an aforementioned foldable carrier structure, wherein the longitudinally extending side structures are made of metal.

An embodiment relates to an aforementioned foldable carrier structure, wherein the longitudinally extending side structures are made of aluminum, providing for a rigid, yet ductile foldable carrier structure.

An embodiment relates to an aforementioned foldable carrier structure, wherein the longitudinally extending side structures are made of plastic, such as high-density polyethylene (HDPE) or polypropylene. By using plastic, a relatively light foldable carrier structure can be realized, being durable and easy to produce.

An embodiment relates to an aforementioned foldable carrier structure, wherein the optical fibers are arranged for measuring deformations or vibrations.

An embodiment relates to an aforementioned foldable carrier structure, wherein the optical fibers are arranged for measuring temperatures.

An embodiment relates to an aforementioned foldable carrier structure, wherein the optical fibers are arranged for measuring chemical contamination or water ingress.

Another aspect of the invention relates to a system according to claim 7.

An embodiment relates to an aforementioned storage system, wherein the rotatable storage element is a cylindrical drum, wherein the flat structure is rolled up on the cylindrical drum with the longitudinal axis of the foldable carrier structure being aligned with the rotational direction of the cylindrical drum.

Another aspect of the invention relates to a method for using an aforementioned foldable carrier structure, according to claim 9.

An embodiment relates to an aforementioned method, wherein the folding step comprises:
- feeding the foldable carrier structure in the unfolded state through an inlet of a folding device along the longitudinal axis, wherein the folding device causes the foldable carrier structure to reach the folded state at an outlet of the folding device. The folding process using the folding device can be carried out by hand, by pulling the structure at the outlet of the folding device, such as by using e.g. a small tractor moving or driving along at the installation location where the structure is to be installed. For instance, in case of a triangular structure, the inlet of the folding device may have a line shape and the outlet may have a triangular shape. When an unfolded carrier structure having a flat structure is fed through the inlet and outlet, respectively, its shape is automatically transformed from a flat shape to a triangular shape.

An embodiment relates to an aforementioned method, wherein the folding step and the installation step are part of a simultaneous, continuous process, which is highly advantageous when in particular large lengths of carrier structure and optical fibers are to be installed.

An embodiment relates to an aforementioned method, wherein the folding step is performed at the installation location. This is also a major benefit of the present invention, in particular when aforementioned large lengths of carrier structure and optical fibers are to be installed. The foldable carrier structure thus does not have to be folded at a factory or workshop and subsequently transported to the installation location, but can be folded on-site, leading to major savings in transport costs.

An embodiment relates to an aforementioned method, wherein the longitudinally extending side structures and longitudinally extending optical fibers are arranged to form a flat structure in the unfolded state, wherein the flat structure is rolled up on the rotatable storage element of the aforementioned storage system. As stated before, such a flat structure can be easily stored, transported and installed at the installation location.

An embodiment relates to an aforementioned method wherein the folding step and the installation step are part of a simultaneous, continuous process, wherein the folding step and the installation step are performed while unrolling the foldable carrier structure from the rotatable element, leading to fast and easy installation at the installation location.

An embodiment relates to an aforementioned method, wherein the object to be monitored is a duct or tube, wherein the foldable carrier structure is inserted into the duct or tube. The foldable carrier structure is preferably attached to the inner surface of the duct or tube in such a way, that a reliable transfer of e.g. the duct's or tube's deformation to the foldable carrier structure and hence the optical fibers is achieved.

An embodiment relates to an aforementioned method, wherein the object to be monitored is soil or concrete, wherein the foldable carrier structure is embedded in the soil or concrete. The foldable carrier structure may be e.g. be installed in a trench or the like, whereafter the trench is filled with the soil or concrete. By for instance providing openings in the side structures or walls of the foldable structure, filling of the internal volume of the foldable carrier structure with e.g. soil prevents the structure from being compressed by the surrounding soil.

Such an open structure also enhances mechanical coupling between the soil and the foldable carrier structure.

An embodiment relates to an aforementioned method, wherein the foldable carrier structure is attached to the object to be monitored by bolting or bonding, such as by gluing. This, however, should be done is such a way that proper force transfer is achieved from the object to the foldable carrier structure and the optical fibers.

### BRIEF DESCRIPTION OF THE DRAWINGS

The present invention will be explained hereafter with reference to exemplary embodiments of a foldable carrier structure according to the invention and with reference to the drawings. Therein:
Figure 1 shows an exemplary embodiment of a foldable carrier structure with a triangular cross-section, in the folded state;
Figure 2 shows an exemplary embodiment of a foldable carrier structure with a rectangular/square cross-section, in the folded state;
Figure 3 shows an exemplary embodiment of a foldable carrier structure having a flat structure in the unfolded state;
Figure 4 shows another exemplary embodiment of a foldable carrier structure having a flat structure in the unfolded state;
Figure 5 shows an exemplary embodiment of a folding device;
Figure 6 shows an exemplary embodiment of a folding device, as well as a storage system for storing the foldable carrier structure;
Figure 7 shows an exemplary embodiment of a foldable carrier structure installed in a duct embedded in concrete at an installation location;
Figure 8 shows two exemplary embodiments of foldable carrier structures installed in a trench at an installation location; and
Figure 9 shows an exemplary embodiment of a foldable carrier structure wherein a duct or tube with optical fibers is arranged in the interior of the foldable carrier structure.

### DETAILED DESCRIPTION

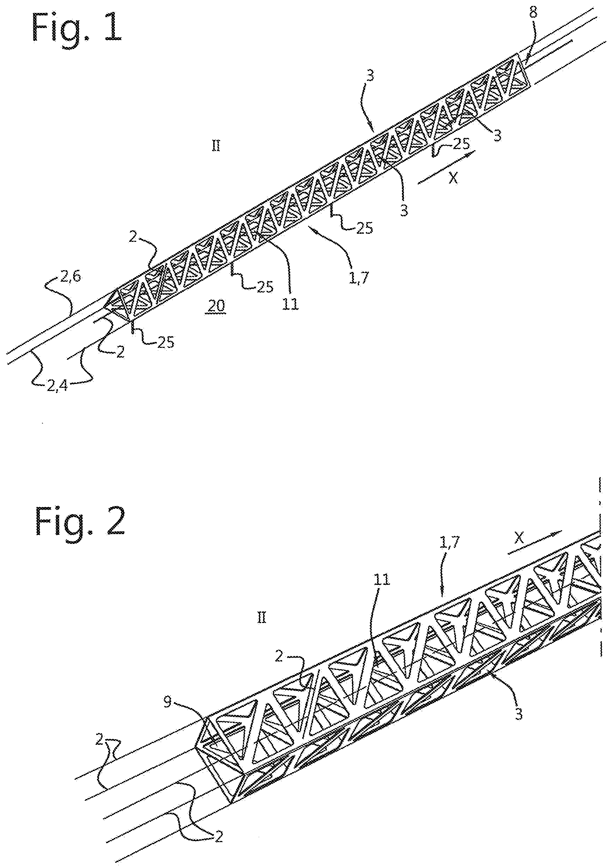

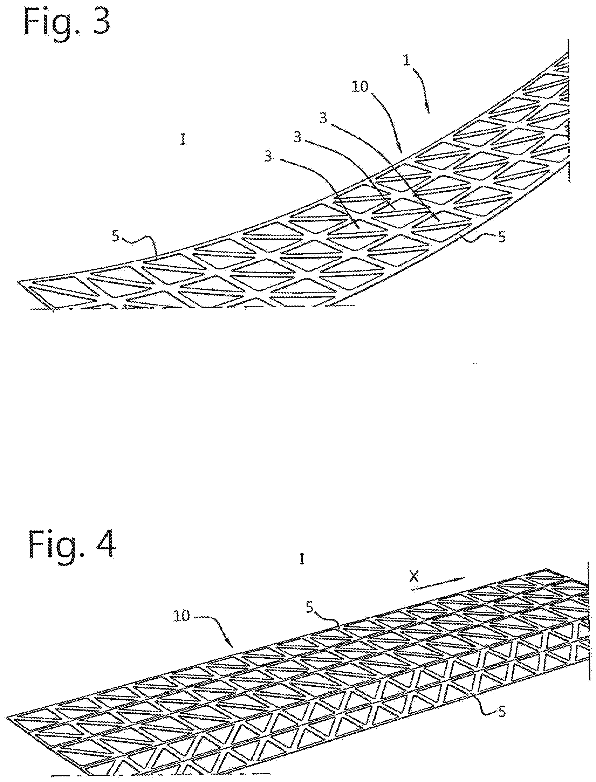

Figures 1-9 will be discussed in conjunction. Figure 1 shows a foldable carrier structure 1 carrying optical fibers 2. The optical fibers 2, for instance comprising Fiber Bragg Gratings (FBG's), are primarily to be used for monitoring and/or sensing applications, although use with telecommunication applications is also conceivable. The foldable carrier structure 1 has a longitudinal axis X. Three longitudinally extending side structures 3 are shown, although two, four, six, eight, twelve, et cetera (basically any number) of side structures 3 are also conceivable. Laterally adjacent side structures 3 are laterally connected to each other along two longitudinally extending folding lines 4, wherein the foldable carrier structure 1 is depicted in the folded state II, wherein the laterally adjacent side structures 3 are folded towards each other along the longitudinally extending folding lines 4 and the lateral end edges 5 (please see e.g. Figure 3) are laterally connected to each other along a longitudinally extending connection line 6 in order to form a rigid, tubular carrier structure 7 for carrying the optical fibers 2. The folding lines 4 can be realized with elastic hinges or the like. Locking pins 25 are showing for spatially fixing the foldable carrier structure 1, for instance to the object 20 to be monitored or another structure.

Three longitudinally extending optical fibers 2 are comprised by, such as attached to, integrated with, embedded in or wrapped around, the foldable carrier structure 1, the tubular carrier structure 7 being configured to keep the optical fibers 2 at a fixed spatial position with respect to the tubular carrier structure 7 and/or each other in the folded state II. In figure 1, the rigid, tubular structure 7 has a triangular cross-section 8. The three longitudinally extending optical fibers 2 are arranged at the connection line 6 and the folding lines 4. Figure 1 also shows a central, longitudinally extending optical fiber or sensing element 2, as well as diagonally arranged optical fibers 2 for measuring torsion. The longitudinally extending side structures 3 comprise truss structures 11, having transversal/lateral members alternated with diagonal members. The diagonally extending optical fibers could be conveniently arranged on or at the diagonal members of the truss structures 11. The longitudinally extending side structures 3 can be made of metal, such as aluminum. The longitudinally extending side structures 3 can also be made of plastic, such as high-density polyethylene (HDPE) or polypropylene. The optical fibers 2 can be arranged for measuring deformations, vibrations, temperatures, chemical contamination or water ingress, to name a few options. The rigid, foldable carrier structure 1, 7 is installed by attaching the foldable carrier structure 1 to, embedding the foldable carrier structure 1 in, or inserting the foldable carrier structure 1 into an object 20 to be monitored at an installation location. The foldable carrier structure 1 as shown in Figure 1 can be attached to the (schematically indicated) object 20 to be monitored by for instance bolting or bonding, or by using the locking pins 25. The foldable carrier structure 1 may have a length of for instance 0.1 - 1 m, 1 - 10 m, 10 - 20 m, 20 - 50 m, 50 - 100 m, 100 - 500 m, or even greater length.

The foldable carrier structure 1 can advantageously be used with civil infrastructure, river banks, dikes, industrial areas, technical infrastructure, cables, chemical plants, storage tanks, et cetera.

Figure 2 shows an exemplary embodiment of a foldable carrier structure 1 in the folded state II, comprising four longitudinally extending side structures 3 with three longitudinally extending folding lines and one longitudinally extending connection line, wherein in the folded state II a rigid, tubular structure 7 with a rectangular or square cross-section 9 is formed. Four optical fibers 2 are arranged at the vertices (at the connection line/folding lines) of the rectangular foldable carrier structure 1. Figure 2 again also shows a central, longitudinally extending optical fiber or sensing element 2, as well as diagonally extending optical fibers 2. Advantageously, the four optical fibers 2 arranged at the vertices can be further repositioned ("tuned") with respect to each other (when seen in cross-section), if desired, by changing the relative positions/angles of the four side structures 3 with respect to each other, and fixating the side structures 3 afterwards, e.g. when seen in cross-section the rectangular or square structure 9 can be reconfigured to resemble a parallelogram or the like.

Figures 3 and 4 show exemplary embodiments of foldable carrier structures 1, wherein three, respectively five, longitudinally extending side structures 3 are shown forming a flat structure 10 in the unfolded state I. The flat structure 10 is flexible and can be easily bent, as shown in Figure 3, for instance to be rolled up on a drum or the like.

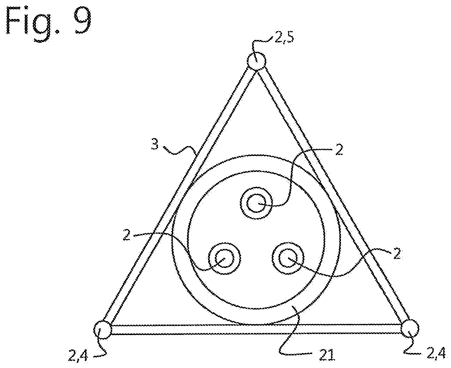

Furthermore, additional fiber-optic based sensing-optimized cables 2 can be inserted in the volume inside the foldable carrier structure 1 (as also shown in Figure 9). These cables 2 can e.g. be inserted as add-on sensors 2 during the folding process, while transforming the flat structure 10 into the final shape of the foldable carrier structure 1. Special attachment points, already integrated in the flat structure 10 can used to fix the additional sensing cables.

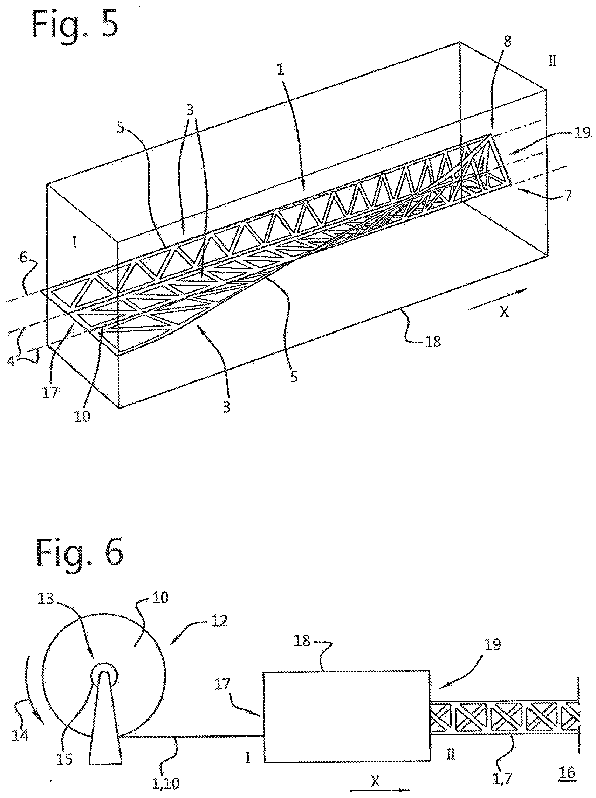

Figure 5 shows the foldable carrier structure 1 in the unfolded state I being fed through an inlet 17 of a folding device 18 along the longitudinal axis X. The folding device 18 causes the foldable carrier structure 1 to reach the folded state II at an outlet 19 of the folding device 18. From left to right, Figure 5 shows the folding of the foldable carrier structure 1 from the unfolded state I to the folded state II, wherein the laterally adjacent side structures 3 are folded towards each other along the longitudinally extending folding lines 4, wherein the lateral end edges 5 are laterally connected to each other along a longitudinally extending connection line 6 in order to form the rigid, tubular carrier structure 7. Connection can be realized by for instance bonding, gluing or the like.

Figure 6 shows a storage system 12 for storing the foldable carrier structure 1. The storage system 12 comprises a rotatable storage element 13 in the form of a cylindrical drum 15, wherein the longitudinally extending side structures 3 and the longitudinally extending optical fibers 2 (not shown in Figure 6) are arranged to form a flat structure 10 in the unfolded state I, wherein the flat structure 10 is rolled up on the rotatable storage element 13 with the longitudinal axis X of the foldable carrier structure 1 during unrolling being aligned with the rotational direction 14 of the rotatable storage element 13. The rigid, foldable carrier structure 1 leaving the outlet 19 of the folding device 18 can immediately be installed at the installation location 16. Preferably, the folding step and the installation step are part of a simultaneous, continuous process. Ideally, and as shown in Figure 6, the folding step is performed at the installation location 16.

At the installation location 16, i.e. the site of deployment, the cylindrical drum 15 can be placed on a carriage which is pulled along the object to be monitored by hand, by an apparatus or by a powered machine, such as a tractor. When releasing the flat structure 10 from the cylindrical drum 15 by forward pulling, folding device 18 transforms the flat structure 10 into the final shape, e.g. when the flat structure 10 is folded by a mechanism on a truck or apparatus riding along the length of the object whereon or wherein the foldable carrier structure 1 has to be installed or embedded. This method allows for economic installation and economic use of innovative monitoring systems for many applications.

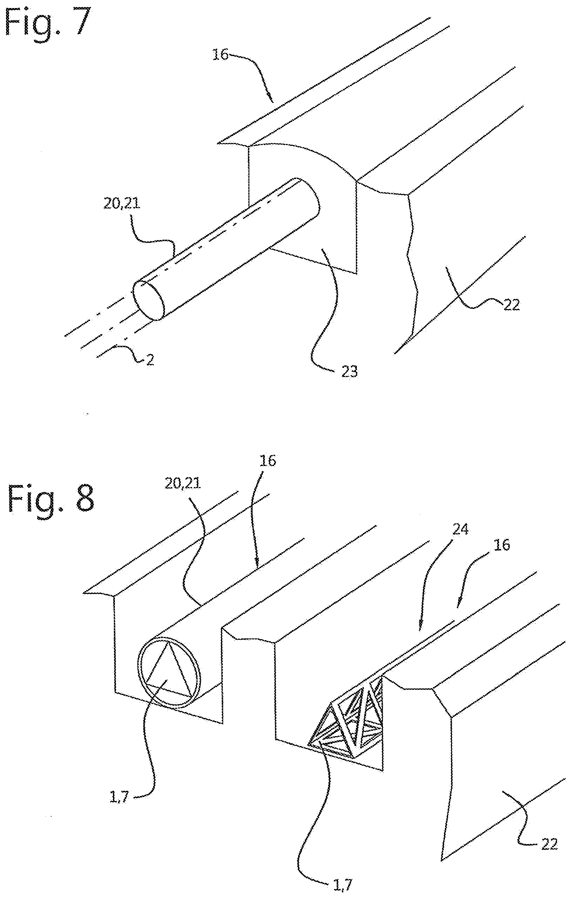

As shown in Figures 7 and 8, the object 20 to be monitored can be a duct or tube 21, wherein the foldable carrier structure 1 is inserted into the duct or tube 21. The object 20 to be monitored can be soil 22 or concrete 23, wherein the foldable carrier structure 1 is embedded in the soil 22 or concrete 23, such as in a trench 24. As illustrated, the foldable carrier structure 1 can be buried or inserted in the tube or duct 21. The duct or tube 21 can be already installed previously, or purposively installed for the respective "monitoring project". After installation, the trench 24 can be filled with (removed) soil 22, or with e.g. bentonite.

As stated before, additional sensors or optical fibers 2, for e.g. sensing vibration, temperature, electromagnetic or chemical parameters, can be added as separate sensor cables or fibers located inside the protective envelope of the foldable carrier structure 1. Figure 9 shows an example of such an embodiment, wherein three optical fibers 2 are arranged in a cable or duct 21, wherein the cable or duct 21 is arranged within the protective envelope of the foldable carrier structure 1 and kept in place by the side structures 3.

It should be clear that the description above is intended to illustrate the operation of preferred embodiments of the invention, and not to reduce the scope of protection of the invention. Starting from the above description, many embodiments will be conceivable to the skilled person within the inventive concept and scope of protection of the present invention as defined by the appended claims.

### LIST OF REFERENCE NUMERALS

- 1.: Foldable carrier structure
- 2.: Optical fiber
- 3.: Longitudinally extending side structure
- 4.: Folding line
- 5.: Lateral end edge
- 6.: Connection line
- 7.: Rigid, tubular carrier structure
- 8.: Triangular cross-section
- 9.: Rectangular/square cross-section
- 10.: Flat structure
- 11.: Truss structure
- 12.: Storage system
- 13.: Rotatable storage element
- 14.: Rotational direction
- 15.: Cylindrical drum
- 16.: Installation location
- 17.: Inlet
- 18.: Folding device
- 19.: Outlet
- 20.: Object to be monitored
- 21.: Duct or tube
- 22.: Soil
- 23.: Concrete
- 24.: Trench
- 25.: Locking pin

- I.: Unfolded state
- II.: Folded state

- X.: Longitudinal axis

## Claims

1. Foldable carrier structure (1) carrying one or more optical fibers (2), comprising:
- a longitudinal axis (X),
- longitudinally extending side structures (3), wherein laterally adjacent side structures (3) are laterally connected to each other along one or more longitudinally extending folding lines (4), wherein the foldable carrier structure (1) is configured for moving from
an unfolded state (I), wherein lateral end edges (5) of the side structures are laterally unconnected, to
a folded state (II), wherein the laterally adjacent side structures (3) are folded towards each other along the one or more longitudinally extending folding lines (4), wherein the lateral end edges (5) are laterally connected to each other along a longitudinally extending connection line (6) in order to form a rigid, tubular carrier structure (7) carrying the one or more optical fibers (2),
wherein the one or more optical fibers (2) are attached to or embedded in the foldable carrier structure (1), the tubular carrier structure (7) being configured to keep the one or more optical fibers (2) at a fixed spatial position with respect to the tubular carrier structure (7) and/or each other in the folded state (II),
wherein the foldable carrier structure (1) is configured for being attached to, embedded in, or inserted into an object (20) to be monitored at an installation location (16), wherein the optical fibers (2) are arranged for monitoring the object or performing measurements of the object, **characterized in that**
the one or more optical fibers (2) are arranged at the connection line (6) and/or folding lines (4), wherein the one or more optical fibers longitudinally extend along the connection line (6) and/or folding lines (4).

2. Foldable carrier structure (1) according to claim 1, comprising three longitudinally extending side structures (3) with two longitudinally extending folding lines (4) and one longitudinally extending connection line (6), wherein in the folded state (II) a rigid, tubular structure (7) with a triangular cross-section (8) is formed.

3. Foldable carrier structure (1) according to claim 1, comprising four longitudinally extending side structures (3) with three longitudinally extending folding lines (4) and one longitudinally extending connection line (6), wherein in the folded state (II) a rigid, tubular structure (7) with a rectangular or square cross-section (9) is formed.

4. Foldable carrier structure (1) according to any one of the preceding claims, wherein the longitudinally extending side structures (3) and the one or more optical fibers (2) are arranged to form a flat structure (10) in the unfolded state (I).

5. Foldable carrier structure (1) according to any one of the preceding claims, wherein the longitudinally extending side structures (3) comprise truss structures (11), wherein the longitudinally extending side structures (3) are preferably made of metal, aluminium or plastic, such as high-density polyethylene (HDPE) or polypropylene.

6. Foldable carrier structure (1) according to any one of the preceding claims, wherein the one or more optical fibers (2) are arranged for measuring deformations, vibrations, temperatures, chemical contamination or water ingress.

7. System comprising a storage system (12) and the foldable carrier structure (1) according to any one of the preceding claims, wherein:
the storage system comprises a rotatable storage element (13), wherein the longitudinally extending side structures (3) and the one or more optical fibers (2) of the foldable carrier structure (1) are arranged to form a flat structure (10) in the unfolded state (I), wherein the flat structure (10) is rolled up on the rotatable storage element (13) with the longitudinal axis (X) of the foldable carrier structure (1) being aligned with the rotational direction (14) of the rotatable storage element (13).

8. System according to claim 7, wherein the rotatable storage element (13) is a cylindrical drum (15), wherein the flat structure (10) is rolled up on the cylindrical drum (15) with the longitudinal axis (X) of the foldable carrier structure (1) being aligned with the rotational direction (14) of the cylindrical drum (15).

9. Method for using a foldable carrier structure (1) according to any one of the claims 1-6, comprising the steps of:
- folding the foldable carrier structure (1) from the unfolded state (I) to the folded state (II), wherein the laterally adjacent side structures (3) are folded towards each other along the longitudinally extending folding lines (4), wherein the lateral end edges (5) are laterally connected to each other along a longitudinally extending connection line (6) in order to form the rigid, tubular carrier structure (7),
- installing the folded foldable carrier structure (1) at an installation location (16), comprising attaching the foldable carrier structure (1) to, embedding the foldable carrier structure (1) in, or inserting the foldable carrier structure (1) into an object (20) to be monitored at the installation location (16), wherein the optical fibers (2) are arranged for monitoring the object or performing measurements of the object.

10. Method according to claim 9, wherein the folding step comprises:
- feeding the foldable carrier structure (1) in the unfolded state (I) through an inlet (17) of a folding device (18) along the longitudinal axis (X), wherein the folding device (18) causes the foldable carrier structure (1) to reach the folded state (II) at an outlet (19) of the folding device (18).

11. Method according to any one of the claims 9-10, wherein the folding step and the installation step are part of a simultaneous, continuous process, wherein the folding step is preferably performed at the installation location (16).

12. Method according to any one of the claims 9-10, wherein the longitudinally extending side structures (3) and the one or more optical fibers (2) are arranged to form a flat structure (10) in the unfolded state (I), wherein the flat structure (10) is rolled up on the rotatable storage element (13) of the storage system (12) according to claim 7 or 8.

13. Method according to claim 12, wherein the folding step and the installation step are part of a simultaneous, continuous process, wherein the folding step and the installation step are performed while unrolling the foldable carrier structure (1) from the rotatable element (13).

14. Method according to claim 9, wherein the object (20) to be monitored is a duct or tube (21), wherein the foldable carrier structure (1) is inserted into the duct or tube (21), wherein the object (20) to be monitored is soil (22) or concrete (23), wherein the foldable carrier structure (1) is embedded in the soil (22) or concrete (23), or wherein the foldable carrier structure (1) is attached to the object (20) to be monitored by bolting or bonding.

## Patentansprüche

1. Faltbare Trägerstruktur (1), die eine oder mehrere optische Fasern (2) trägt, umfassend:
- eine Längsachse (X),
- sich in Längsrichtung erstreckende Seitenstrukturen (3), wobei seitlich benachbarte Seitenstrukturen (3) entlang einer oder mehrerer sich in Längsrichtung erstreckender Faltlinien (4) seitlich miteinander verbunden sind, wobei die faltbare Trägerstruktur (1) zum Bewegen aus einem entfalteten Zustand (I), in dem seitliche Endkanten (5) der Seitenstrukturen seitlich unverbunden sind, in
einen gefalteten Zustand (II) konfiguriert ist, in dem die seitlich benachbarten Seitenstrukturen (3) entlang der einen oder mehreren sich in Längsrichtung erstreckenden Faltlinien (4) aufeinander zu gefaltet sind, wobei die seitlichen Endkanten (5) entlang einer sich in Längsrichtung erstreckenden Verbindungslinie (6) seitlich miteinander verbunden sind, um eine starre, rohrförmige Trägerstruktur (7) zu bilden, welche die eine oder mehreren optischen Fasern (2) trägt,
wobei die eine oder mehreren optischen Fasern (2) an der faltbaren Trägerstruktur (1) angebracht oder in diese eingebettet sind, wobei die rohrförmige Trägerstruktur (7) dazu konfiguriert ist, die eine oder mehreren optischen Fasern (2) in dem gefalteten Zustand (II) in einer festen räumlichen Position in Bezug auf die rohrförmige Trägerstruktur (7) und/oder einander zu halten,
wobei die faltbare Trägerstruktur (1) dazu konfiguriert ist, an einem zu überwachenden Objekt (20) an einer Montagestelle (16) angebracht, darin eingebettet oder darin eingesetzt zu sein, wobei die optischen Fasern (2) dazu angeordnet sind, das Objekt zu überwachen oder Messungen des Objekts durchzuführen, **dadurch gekennzeichnet, dass**
die eine oder mehreren optischen Fasern (2) an der Verbindungslinie (6) und/oder den Faltlinien (4) angeordnet sind, wobei sich die eine oder mehreren optischen Fasern in Längsrichtung entlang der Verbindungslinie (6) und/oder Faltlinien (4) erstrecken.

2. Faltbare Trägerstruktur (1) nach Anspruch 1, umfassend drei sich in Längsrichtung erstreckende Seitenstrukturen (3) mit zwei sich in Längsrichtung erstreckenden Faltlinien (4) und einer sich in Längsrichtung erstreckenden Verbindungslinie (6), wobei in dem gefalteten Zustand (II) eine starre, rohrförmige Struktur (7) mit einem dreieckigen Querschnitt (8) gebildet ist.

3. Faltbare Trägerstruktur (1) nach Anspruch 1, umfassend vier sich in Längsrichtung erstreckende Seitenstrukturen (3) mit drei sich in Längsrichtung erstreckenden Faltlinien (4) und einer sich in Längsrichtung erstreckenden Verbindungslinie (6), wobei in dem gefalteten Zustand (II) eine starre, rohrförmige Struktur (7) mit rechteckigem oder quadratischem Querschnitt (9) gebildet ist.

4. Faltbare Trägerstruktur (1) nach einem der vorhergehenden Ansprüche, wobei die sich in Längsrichtung erstreckenden Seitenstrukturen (3) und die eine oder mehreren optischen Fasern (2) angeordnet sind, um in dem entfalteten Zustand (I) eine flache Struktur (10) zu bilden.

5. Faltbare Trägerstruktur (1) nach einem der vorhergehenden Ansprüche, wobei die sich in Längsrichtung erstreckenden Seitenstrukturen (3) Fachwerkstrukturen (11) umfassen, wobei die sich in Längsrichtung erstreckenden Seitenstrukturen (3) vorzugsweise aus Metall, Aluminium oder Kunststoff, wie etwa Polyethylen mit hoher Dichte (HDPE) oder Polypropylen, hergestellt sind.

6. Faltbare Trägerstruktur (1) nach einem der vorhergehenden Ansprüche, wobei die eine oder mehreren optischen Fasern (2) zum Messen von Verformungen, Schwingungen, Temperaturen, chemischer Kontamination oder Wassereintritt angeordnet sind.

7. System, umfassend ein Speichersystem (12) und die faltbare Trägerstruktur (1) nach einem der vorhergehenden Ansprüche, wobei:
das Speichersystem ein drehbares Speicherelement (13) umfasst, wobei die sich in Längsrichtung erstreckenden Seitenstrukturen (3) und die eine oder mehreren optischen Fasern (2) der faltbaren Trägerstruktur (1) angeordnet sind, um in dem entfalteten Zustand (I) eine flache Struktur (10) zu bilden, wobei die flache Struktur (10) auf dem drehbaren Speicherelement (13) aufgerollt ist, wobei die Längsachse (X) der faltbaren Trägerstruktur (1) mit der Drehrichtung (14) des drehbaren Speicherelements (13) ausgerichtet ist.

8. System nach Anspruch 7, wobei das drehbare Speicherelement (13) eine zylindrische Trommel (15) ist, wobei die flache Struktur (10) auf der zylindrischen Trommel (15) aufgerollt ist, wobei die Längsachse (X) der faltbaren Trägerstruktur (1) mit der Drehrichtung (14) der zylindrischen Trommel (15) ausgerichtet ist.

9. Verfahren zur Verwendung einer faltbaren Trägerstruktur (1) nach einem beliebigen der Ansprüche 1-6, umfassend die folgenden Schritte:
- Falten der faltbaren Trägerstruktur (1) aus dem entfalteten Zustand (I) in den gefalteten Zustand (II), wobei die seitlich benachbarten Seitenstrukturen (3) entlang der sich in Längsrichtung erstreckenden Faltlinien (4) aufeinander zu gefaltet sind, wobei die seitlichen Endkanten (5) entlang einer sich in Längsrichtung erstreckenden Verbindungslinie (6) seitlich miteinander verbunden sind, um die starre, rohrförmige Trägerstruktur (7) zu bilden,
- Montieren der gefalteten faltbaren Trägerstruktur (1) an einer Montagestelle (16), umfassend Anbringen der faltbaren Trägerstruktur (1) an
einem zu überwachenden Objekt (20), Einbetten der faltbaren Trägerstruktur (1) oder Einsetzen der faltbaren Trägerstruktur (1) darin, an der Montagestelle (16), wobei die optischen Fasern (2) zum Überwachen des Objekts oder zum Durchführen von Messungen des Objekts angeordnet sind.

10. Verfahren nach Anspruch 9, wobei der Faltschritt Folgendes umfasst:
- Zuführen der faltbaren Trägerstruktur (1) in dem entfalteten Zustand (I) durch einen Einlass (17) einer Faltvorrichtung (18) entlang der Längsachse (X), wobei die Faltvorrichtung (18) bewirkt, dass die faltbare Trägerstruktur (1) den gefalteten Zustand (II) an einem Auslass (19) der Faltvorrichtung (18) erreicht.

11. Verfahren nach einem der Ansprüche 9-10, wobei der Faltschritt und der Montageschritt Teil eines gleichzeitigen, kontinuierlichen Prozesses sind, wobei der Faltschritt vorzugsweise an der Montagestelle (16) durchgeführt wird.

12. Verfahren nach einem der Ansprüche 9-10, wobei die sich in Längsrichtung erstreckenden Seitenstrukturen (3) und die eine oder mehreren optischen Fasern (2) angeordnet sind, um in dem entfalteten Zustand (I) eine flache Struktur (10) zu bilden, wobei die flache Struktur (10) auf dem drehbaren Speicherelement (13) des Speichersystems (12) nach Anspruch 7 oder 8 aufgerollt wird.

13. Verfahren nach Anspruch 12, wobei der Faltschritt und der Montageschritt Teil eines gleichzeitigen, kontinuierlichen Prozesses sind, wobei der Faltschritt und der Montageschritt während des Abrollens der faltbaren Trägerstruktur (1) von dem drehbaren Element (13) durchgeführt werden.

14. Verfahren nach Anspruch 9, wobei das zu überwachende Objekt (20) ein Kanal oder Rohr (21) ist, wobei die faltbare Trägerstruktur (1) in den Kanal oder das Rohr (21) eingesetzt wird, wobei das zu überwachende Objekt (20) ein Boden (22) oder Beton (23) ist, wobei die faltbare Trägerstruktur (1) in den Boden (22) oder Beton (23) eingebettet ist oder wobei die faltbare Trägerstruktur (1) durch Verschrauben oder Verkleben an dem zu überwachenden Objekt (20) angebracht wird.

## Revendications

1. Structure de support pliable (1) pour porter une ou plusieurs fibres optiques (2), comprenant :
- un axe longitudinal (X),
- des structures latérales s'étendant longitudinalement (3), dans laquelle des structures latérales latéralement adjacentes (3) sont connectées latéralement les unes aux autres le long d'une ou plusieurs lignes de pliage s'étendant longitudinalement (4), dans laquelle la structure de support pliable (1) est conçue pour se déplacer
depuis un état déplié (I), dans lequel les bords d'extrémité latéraux (5) des structures latérales sont latéralement déconnectés,
vers un état plié (II), dans lequel les structures latérales latéralement adjacentes (3) sont pliées les unes vers les autres le long de l'une ou plusieurs lignes de pliage s'étendant longitudinalement (4), dans laquelle les bords d'extrémité latéraux (5) sont connectés latéralement les uns aux autres le long d'une ligne de connexion s'étendant longitudinalement (6) afin de former une structure de support tubulaire rigide (7) pour porter l'une ou plusieurs fibres optiques (2),
dans lequel l'une ou plusieurs fibres optiques (2) sont fixées à ou encastrées dans la structure de support pliable (1), la structure de support tubulaire (7) étant conçue pour maintenir l'une ou plusieurs fibres optiques (2) à une position spatiale fixe par rapport à la structure de support tubulaire (7) et/ou les unes par rapport aux autres dans l'état plié (II),
dans laquelle la structure de support pliable (1) est conçue pour être fixée à, encastrée dans ou insérée dans un objet (20) devant être surveillé à un emplacement d'installation (16), dans laquelle les fibres optiques (2) sont agencées pour surveiller l'objet ou effectuer des mesures de l'objet, **caractérisée en ce que**
l'une ou plusieurs fibres optiques (2) sont agencées au niveau de la ligne de connexion (6) et/ou des lignes de pliage (4), dans laquelle l'une ou plusieurs fibres optiques s'étendent longitudinalement le long de la ligne de connexion (6) et/ou des lignes de pliage (4).

2. Structure de support pliable (1) selon la revendication 1, comprenant trois structures latérales s'étendant longitudinalement (3) avec deux lignes de pliage s'étendant longitudinalement (4) et une ligne de connexion s'étendant longitudinalement (6), dans laquelle, à l'état plié (II), une structure tubulaire rigide (7) de section transversale triangulaire (8) est formée.

3. Structure de support pliable (1) selon la revendication 1, comprenant quatre structures latérales s'étendant longitudinalement (3) avec trois lignes de pliage s'étendant longitudinalement (4) et une ligne de connexion s'étendant longitudinalement (6), dans laquelle, à l'état plié (II), une structure tubulaire rigide (7) de section rectangulaire ou carrée (9) est formée.

4. Structure de support pliable (1) selon l'une quelconque des revendications précédentes, dans laquelle les structures latérales s'étendant longitudinalement (3) et l'une ou plusieurs fibres optiques (2) sont agencées pour former une structure plate (10) à l'état déplié (I).

5. Structure de support pliable (1) selon l'une quelconque des revendications précédentes, dans laquelle les structures latérales s'étendant longitudinalement (3) comprennent des structures en treillis (11), dans laquelle les structures latérales s'étendant longitudinalement (3) sont de préférence constituées de métal, d'aluminium ou de plastique, tel que le polyéthylène haute densité (PEHD) ou le polypropylène.

6. Structure de support pliable (1) selon l'une quelconque des revendications précédentes, dans laquelle l'une ou plusieurs fibres optiques (2) sont agencées pour mesurer les déformations, les vibrations, les températures, la contamination chimique ou l'entrée d'eau.

7. Système comprenant un système de stockage (12) et la structure de support pliable (1) selon l'une quelconque des revendications précédentes, dans laquelle :
le système de stockage comprend un élément de stockage rotatif (13), dans lequel les structures latérales s'étendant longitudinalement (3) et l'une ou plusieurs fibres optiques (2) de la structure de support pliable (1) sont agencées pour former une structure plate (10) à l'état déplié (I), dans lequel la structure plate (10) est enroulée sur l'élément de stockage rotatif (13) avec l'axe longitudinal (X) de la structure de support pliable (1) étant aligné à la direction de rotation (14) de l'élément de stockage rotatif (13).

8. Système selon la revendication 7, dans lequel l'élément de stockage rotatif (13) est un tambour cylindrique (15), dans lequel la structure plate (10) est enroulée sur le tambour cylindrique (15), avec l'axe longitudinal (X) de la structure de support pliable (1) étant aligné à la direction de rotation (14) du tambour cylindrique (15).

9. Procédé permettant l'utilisation d'une structure de support pliable (1) selon l'une quelconque des revendications 1 à 6, comprenant les étapes de :
- le pliage de la structure de support pliable (1) de l'état déplié (I) à l'état plié (II), dans lequel les structures latérales latéralement adjacentes (3) sont pliées les unes vers les autres le long des lignes de pliage s'étendant longitudinalement (4), dans lequel les bords d'extrémité latéraux (5) sont connectés latéralement les uns aux autres le long d'une ligne de connexion s'étendant longitudinalement (6) afin de former la structure de support tubulaire rigide (7),
- l'installation de la structure de support pliable pliée (1) à un emplacement d'installation (16), comprenant la fixation de la structure de support pliable (1) à, l'encastrement de la structure de support pliable (1) dans, ou l'insertion de la structure de support pliable (1) dans un objet (20) devant être surveiller à l'emplacement d'installation (16), dans lequel les fibres optiques (2) sont agencées pour surveiller l'objet ou effectuer des mesures de l'objet.

10. Procédé selon la revendication 9, dans lequel l'étape de pliage comprend :
- la conduite de la structure de support pliable (1) à l'état déplié (I) à travers une entrée (17) d'un dispositif de pliage (18) le long de l'axe longitudinal (X), dans lequel le dispositif de pliage (18) amène la structure de support pliable (1) à atteindre l'état plié (II) au niveau d'une sortie (19) du dispositif de pliage (18).

11. Procédé selon l'une quelconque des revendications 9 ou 10, dans lequel l'étape de pliage et l'étape d'installation font partie d'un processus continu simultané, dans lequel l'étape de pliage est de préférence effectuée au niveau de l'emplacement d'installation (16).

12. Procédé selon l'une quelconque des revendications 9 à 10, dans lequel les structures latérales s'étendant longitudinalement (3) et l'une ou plusieurs fibres optiques (2) sont agencées pour former une structure plate (10) à l'état déplié (I), dans lequel la structure plate (10) est enroulée sur l'élément de stockage rotatif (13) du système de stockage (12) selon la revendication 7 ou 8.

13. Procédé selon la revendication 12, dans lequel l'étape de pliage et l'étape d'installation font partie d'un processus continu simultané, dans lequel l'étape de pliage et l'étape d'installation sont effectuées tout en déroulant la structure de support pliable (1) de l'élément rotatif (13).

14. Procédé selon la revendication 9, dans lequel l'objet (20) devant être surveillé est un conduit ou un tube (21), dans lequel la structure de support pliable (1) est insérée dans le conduit ou le tube (21), dans lequel l'objet (20) à surveiller est un sol (22) ou du béton (23), dans lequel la structure de support pliable (1) est encastrée dans le sol (22) ou le béton (23), ou dans lequel la structure de support pliable (1) est fixée à l'objet (20) devant être surveillé par boulonnage ou collage.
